# DEMANDE DE BREVET EUROPEEN

(11) **EP 0 728 508 A1**
(43) Date de publication de la demande: **28.08.1996**
(21) Numéro de dépôt: 95440007.3
(22) Date de dépôt: 24.02.1995
(51) Int. Cl.: B01D 9/00, F28D 7/08

(54) **Réacteur de cristallisation**

(71) Demandeur: BEFS PROKEM (Société Anonyme), F-68100 Mulhouse (FR)
(72) Inventeur: Schwartz, Gilbert, F-54000 Nancy (FR); Cunin, Pierre, F-54180 Heillecourt (FR); Drouglazet, Guenael, F-68260 Kingersheim (FR); Hassene, Miloud, F-68100 Mulhouse (FR)
(74) Mandataire: Rhein, Alain

(57) **Abrégé**

L'invention concerne un réacteur de cristallisation (1) comportant une enceinte (3) délimitée par une enveloppe (5) destinée à recevoir un liquide à cristalliser, et une pluralité de tubes (21) disposés dans l'enceinte (3) et destinés à être parcourus par un fluide de transfert calorifique pour entraîner la cristallisation dudit liquide.

Le réacteur (1) est caractérisé en ce qu'il comporte une pluralité d'ouvertures (19) aménagées dans des parois (11, 13, 15, 17) de l'enveloppe (5), chacun desdits tubes (21) ayant ses extrémités engagées à travers des ouvertures (19) respectives et fixées à l'enveloppe (5), de sorte que les parois (11, 13, 15, 17) sont renforcées deux à deux par les tubes (21) agissant comme des tirants.

L'invention trouve notamment une application dans les industries faisant appel à la cristallisation de liquides.

## Description

La présente invention concerne un réacteur comportant une enceinte délimitée par une enveloppe et destinée à recevoir un liquide à cristalliser, et une pluralité de tubes disposés dans ladite enceinte et destinés à être parcourus par un fluide de transfert calorifique pour entraîner une cristallisation dans le dispositif.

La présente invention trouvera son utilité dans toute industrie faisant appel à des techniques de cristallisation, et notamment les industries de purification de liquides par cristallisation.

La purification par cristallisation est un procédé de traitement dans lequel on utilise la différence de température de cristallisation de liquides pour séparer ces derniers. Au cours d'une telle cristallisation, on obtient d'une part un produit purifié, et d'autre part un résidu. Pour obtenir un produit purifié qui soit de plus en plus pur, le procédé est mis en oeuvre en plusieurs étapes de cristallisation successives, à l'aide d'un dispositif de cristallisation, qui est fondamentalement un échangeur de chaleur, et qui sera appelé dans la suite le "réacteur", à titre de simplification.

On connaît déjà dans l'état de la technique, des réacteurs de type spiralé et des réacteurs du type à tubes. Alors que les réacteurs spiralés sont particulièrement complexes à réaliser, les réacteurs à tubes connus sont d'une conception plus simple, mais présentent l'inconvénient d'une trop faible résistance mécanique.

En effet, les réacteurs à tubes comportent une enveloppe extérieure qui est souvent de forme parallélépipédique, compte tenu des volumes à traiter et des dimensions importantes du dispositif. Dans cette enveloppe s'étendent des réseaux de tubes, disposés dans une seule direction donnée, soit horizontalement, soit verticalement. Les réseaux de tubes sont entièrement enfermés à l'intérieur de l'enveloppe du réacteur, et seuls quelques piquages sont prévus pour permettre leur raccordement, par l'une de leurs extrémités, à une conduite d'alimentation en fluide de transfert calorifique, et par l'extrémité opposée, à une conduite d'évacuation du fluide de transfert, constitué selon les cas par un liquide réfrigérant ou chaud.

Par conséquent, l'enveloppe des réacteurs connus n'est pas réellement maintenue par aucun de ses côtés, de sorte qu'elle présente une résistance mécanique insuffisante pour permettre un traitement de cristallisation sous pression, qui, comme on le sait, permet de modifier les points d'ébullition, mais aussi de cristallisation d'un produit. Il s'ensuit que les réacteurs du type connu précité sont d'un usage limité.

Afin de remédier en partie aux problème de tenue mécanique, il a été prévu, dans certains réacteurs connus, de ceinturer son enveloppe au moyen de cornières métalliques.

Or, on s'est aperçu que de telles cornières se comportent en fait comme des ailettes de refroidissement, de sorte qu'il se produit, au niveau de l'enveloppe du réacteur, des échanges thermiques relativement importants. Il en résulte des gradients de température à l'intérieur du réacteur. Or, il est évident que pour obtenir un rendement optimal lors de la séparation des composants du produit à traiter, il est indispensable que la température soit pratiquement identique en tous points du réacteur, de sorte que les cornières ne sont pas adaptées pour renforcer la tenue mécanique de ce type de réacteurs.

En outre, un inconvénient supplémentaire des réacteurs connus réside dans la configuration des ailettes qui garnissent leurs tubes. De façon connue, les tubes transportant le fluide de transfert comportent des ailettes disposées en forme de spirale autour des tubes, ce qui leur confère une surface d'échange thermique faible par rapport au volume de produit à traiter.

Enfin, de par la structure de réseau entièrement interne formée par les tubes, il est nécessaire de démonter le réacteur pour procéder à sa réparation en cas de fuite au niveau d'un tube d'échange. Dans certains cas, notamment dans le cas où les produits à traiter sont toxiques, on est amené à remplacer tout le réacteur plutôt que de prendre le risque de le réparer. Bien évidemment, le coût du traitement en sera fortement affecté.

La présente invention a pour but de remédier à l'ensemble des inconvénients précités en proposant un réacteur de cristallisation qui présente une excellente tenue mécanique, même à des pressions de fonctionnement élevées (de l'ordre de quelque bars), une construction à la fois modulaire et dense pour, d'une part, permettre des réparations aisées et peu coûteuses en cas de fuite d'un tube et, d'autre part, optimiser les échanges thermiques et présenter un rendement élevé du réacteur par unité de volume.

A cet effet, l'invention concerne un réacteur comportant une enceinte délimitée par une enveloppe et destinée à recevoir un liquide à cristalliser, et une pluralité de tubes disposés dans ladite enceinte et destinés à être parcourus par un fluide de transfert pour entraîner la cristallisation, caractérisé en ce qu'il comporte une pluralité d'ouvertures aménagées dans des parois de l'enveloppe, chacun desdits tubes ayant ses extrémités engagées à travers des ouvertures respectives et fixées à l'enveloppe, de sorte que les parois sont renforcées deux à deux par les tubes agissant comme des tirants.

Selon d'autres caractéristiques de l'invention, dans le cas particulier où l'enveloppe présente une forme parallélépipédique comportant un fond, un couvercle et quatre parois latérales, les tubes sont disposés en nappes selon des plans parallèles au fond et au couvercle, et les tubes des nappes successives sont alternativement disposées dans des directions perpendiculaires, ce qui permet d'assurer une répartition homogène des efforts exercés sur les tubes et les parois de l'enveloppe. Une telle disposition permet encore d'annuler les effets de paroi thermique et de supprimer les moyens renforçant habituellement l'enveloppe.

En outre, aux endroits où les tubes débouchent dans des parois opposées de l'enveloppe, les extrémités des tubes sont fixées par soudure, ou encore par bridage, de sorte qu'un tube défectueux puisse aisément être chemisé ou réparé.

Par ailleurs, les extrémités des tubes débouchant à travers une même paroi latérale de l'enveloppe sont raccordées deux à deux par l'intermédiaire de tubes de raccordement à 180°, de façon à connecter en série des ensembles de tubes entre un collecteur d'alimentation en fluide de transfert et un collecteur d'évacuation.

De préférence, le fond et le couvercle de l'enveloppe sont reliés par une pluralité de tirants, contribuant à la tenue mécanique de l'enceinte du dispositif lors de sa mise sous pression.

De préférence également, des ailettes d'échange thermique, notamment en tôle métallique de forme parallélépipédique, sont enfilées et fixées sur les tubes, contribuant à augmenter la surface d'échange thermique entre le liquide à cristalliser et le fluide de transfert. Les ailettes des nappes de tubes successives sont agencées de telle manière que leurs bords se touchent, afin d'assurer la continuité thermique et le drainage du liquide à l'intérieur du réacteur.

L'enveloppe du réacteur est posée sur un bâti comportant une pluralité de tubulures en parallèle pour l'alimentation et la vidange du produit à traiter, ce qui contribue à augmenter la vitesse et l'efficacité du remplissage ou de la vidange du réacteur.

De préférence, des moyens additionnels de drainage sous la forme de croisillons, sont disposés d'une part, entre les tirants, avec lesquels ils sont en contact, et d'autre part, les piquages des tubulures de remplissage/vidange, de façon à faciliter le drainage du liquide au cours des étapes du procédé de cristallisation.

D'autres buts et avantages de la présente invention apparaîtront au cours de la description suivante faite à titre d'exemple non limitatif et aux dessins ci-annexés dans lesquels :
- la figure 1 est une vue en élévation partiellement en coupe, d'un côté de réacteur selon l'invention ;
- la figure 2 est une vue en plan, partiellement en coupe II-II du réacteur de la figure 1 ;
- la figure 3 est une vue en élévation et en coupe III-III de la partie inférieure du réacteur de la figure 2 ;
- la figure 4 est une vue en plan de la partie inférieure du réacteur telle que représentée en figure 3 ;
- la figure 5 est une vue de détail en perspective du croisement de deux tubes du réacteur agencés en conformité avec l'invention.

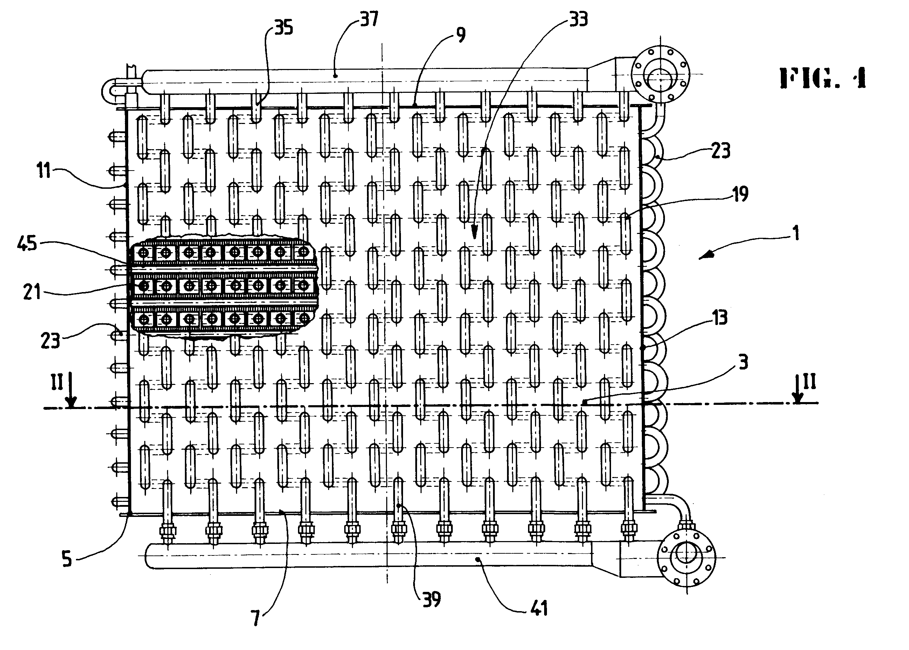

On se réfère aux figures 1 et 2, représentant l'aspect extérieur général d'un mode de réalisation du réacteur conforme à l'invention. Bien que la description qui suit se rapporte à un réacteur ayant une enveloppe de forme parallélépipédique avec un fond et un couvercle horizontaux et des parois latérales verticales, il doit être compris qu'il ne s'agit là que d'un exemple de réalisation et que l'homme du métier pourrait aisément en déduire des réalisations présentant des formes ou une orientation différentes, sans sortir du cadre de l'invention.

Le réacteur 1 selon l'invention comporte principalement une enceinte 3 servant d'échangeur de chaleur, délimitée par une enveloppe 5 qui est, dans le cas choisi, de forme parallélépipédique. L'enveloppe 5 est destinée à recevoir un liquide à cristalliser, qui est amené d'une manière qui sera décrite plus loin. L'enveloppe 5 comporte un fond 7, un couvercle 9, et quatre parois latérales 11, 13, 15, 17, ces différentes pièces étant notamment en tôle métallique, par exemple en aluminium, et assemblées par soudure ou par tout autre moyen approprié.

L'enveloppe 5 présente, au moins dans deux parois opposées 11, 13 ou 15, 17, une série d'ouvertures 19 usinées et de préférence régulièrement espacées dans les parois.

Le réacteur 1, conforme à l'invention, comporte en outre une pluralité de tubes 21 rectilignes, traversant de part en part l'enveloppe 5 et dont les extrémités opposées sont engagées dans les ouvertures 19 correspondantes de deux parois 11, 15, 13, 17 opposées de l'enveloppe 5.

Selon l'invention, les extrémités des tubes 21 sont soudées au niveau de leur paroi externe dans les ouvertures 19. De cette façon, l'enceinte 3, destinée à recevoir le liquide à traiter, n'est jamais en contact avec l'intérieur des tubes 21 où va circuler le fluide de transfert calorifique. Afin de fermer le circuit du fluide de transfert, Il est nécessaire de raccorder les différents tubes 21 en série les uns avec les autres. Selon l'invention, ces raccordements sont effectués à l'extérieur de l'enveloppe 5, au moyen de coudes 23 à 180° fixés, par exemple par soudure, sur deux ouvertures 19 voisines. Cependant, ces coudes 23 peuvent encore être bridés sur les ouvertures, de sorte qu'en cas de fuite d'un tube 21, il est plus aisé de mettre celui-ci hors du circuit de fluide de transfert, en modifiant simplement le raccordement des coudes 23 qui sont reliés à lui.

Il est important de noter que la fixation des tubes 21 sur des parois opposées de l'enveloppe 5 permet de considérablement augmenter la tenue de cette dernière aux pressions, puisque les tubes 21 agissent comme des tirants qui maintiennent constant l'écartement entre les parois opposées correspondantes.

Dans le mode de réalisation avantageux représenté, un grand nombre de tubes 21 est prévu. Afin de rendre les propriétés de tenue mécanique de l'enveloppe 5 homogènes sur toutes ses parois, les tubes 21 sont répartis en deux séries de nappes 25, 27 disposées parallèlement au fond 7 et au couvercle 9 de l'enveloppe 5. En outre, les nappes 25, 27 successives ou des groupes successifs de nappes 25, 27 disposées entre le fond 7 et le couvercle 9 ont leur tubes 21 croisés d'une nappe à l'autre, (c'est à dire d'une nappe 25 orientée verticalement en figure 2 à une nappe 27 orientée horizontalement) ou d'un groupe de nappes à l'autre. Il en résulte en définitive, deux séries de nappes. Les tubes 21 de chaque série de nappes sont perpendiculaires, dans la configuration représentée, aux tubes 21 de l'autre série. En outre, les tubes de chaque série de nappes (25, 27) sont disposés parallèlement à deux premières parois latérales opposées (11, 13 et 15, 17 respectivement) de l'enveloppe 5 et débouchent dans les ouvertures 19 des deux secondes parois latérales opposées (15, 17 et 11, 13 respectivement) de l'enveloppe 5.

Les tubes 21 étant positionnés dans l'enveloppe qu'ils renforcent, il est nécessaire de raccorder les différents tubes à l'aide de coudes 23 à 180°, pour obtenir un ou plusieurs circuits de fluide de transfert. Un mode de raccordement des tubes 21 est représenté dans les figures 1 et 2. Selon ce mode de raccordement, chaque tube 21 est raccordé à une de ses extrémités 29 à un tube voisin situé dans le même plan horizontal, et est raccordé à son autre extrémité 31 à un tube voisin situé dans le même plan vertical. Ce mode de connexion est en outre répété en zigzag (figure 1), de sorte que le fluide de transfert circule globalement de bas en haut ou de haut en bas, en empruntant une série de courts trajets à travers les coudes 23 à 180°, entrecoupés de trajets horizontaux dans des tubes 21 parallèles. ainsi, est définie une série de circuits tridimensionnels en zigzag 33 entre les parois opposées 11, 13 ou 15, 17, ces circuits venant amener de façon homogène le fluide de transfert à l'intérieur de l'enveloppe 5 du réacteur 1.

Le fluide de transfert est amené à l'entrée de chaque circuit en zigzag 33 par l'intermédiaire d'un piquage 35 dans un collecteur d'amenée 37 et est extrait à la sortie de chaque circuit en zigzag par l'intermédiaire d'un piquage 39 dans un collecteur de sortie 41. La même configuration de collecteurs est reproduite sur la paroi latérale 15 perpendiculaire à la paroi 11 de l'enveloppe 5.

Bien entendu, la méthode de raccordement des tubes 21 dépend de leur nombre et de leur agencement et de la disposition des piquages 35, 39 dont on disposera dans les collecteurs d'alimentation 37 et d'évacuation 41. Elle peut encore dépendre du gradient de température, entre le haut et le bas du réacteur, qui est déterminé en fonction du produit à traiter.

Afin d'assurer une meilleure tenue mécanique du fond 7 et du couvercle 9 vis à vis de la pression du liquide à traiter, l'invention prévoit en outre des tirants 43 fixés à intervalles réguliers entre le fond 7 et le couvercle 9, comme représenté en figures 2 et 4.

On comprend que grâce à la conception décrite ci-dessus, toutes les parois 11, 13, 15, 17, 7, 9 du réacteur sont parfaitement maintenues, de sorte qu'elles sont à même de supporter des pressions bien plus élevées que dans les réalisations connues. En outre, étant donné que ces parois sont directement en contact avec les tubes 21, leur température est sensiblement identique à celle de ces derniers, de sorte qu'à l'intérieur du réacteur 1, il ne se crée pas, comme par le passé, de gradients de température.

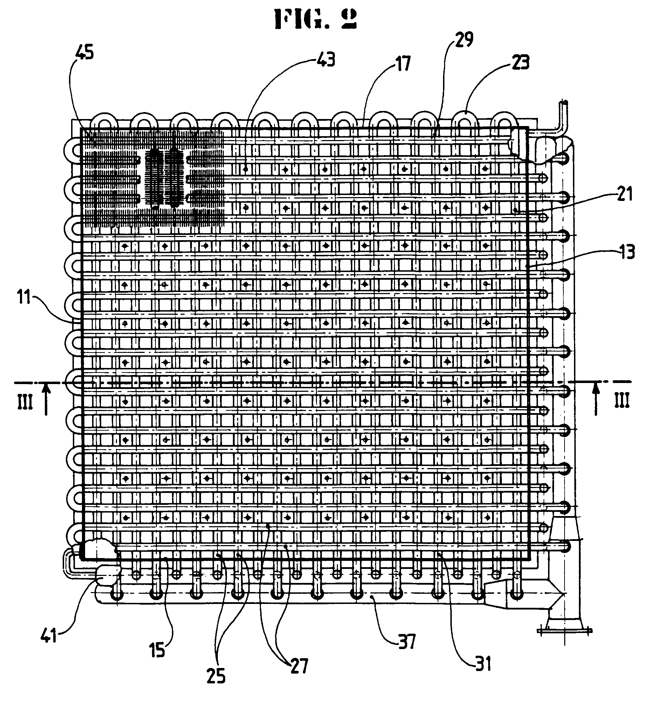

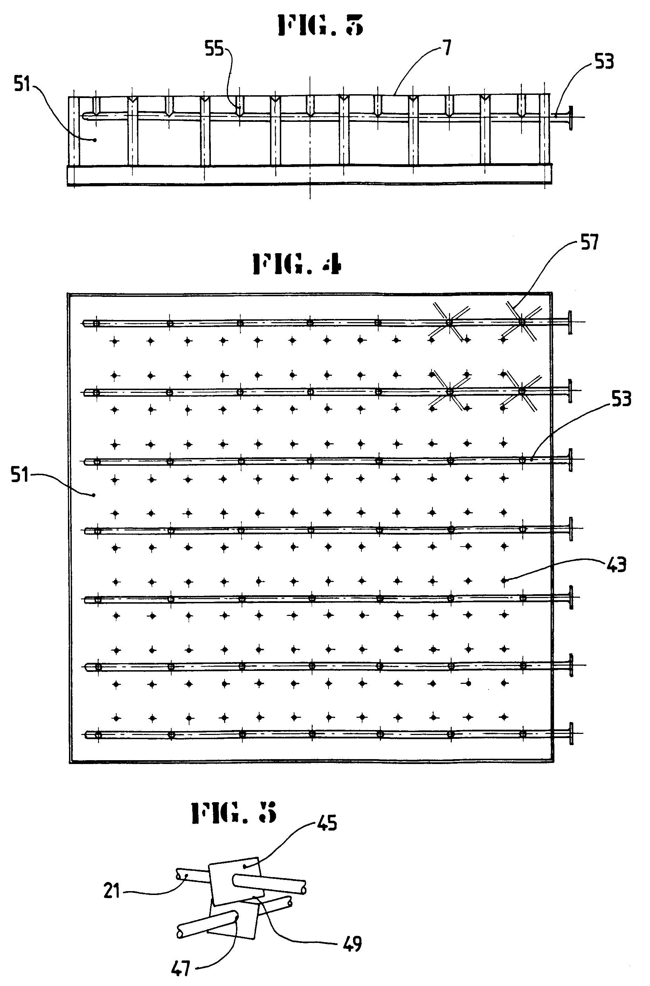

Selon une variante avantageuse de l'invention, les tubes 21 du circuit de fluide de transfert sont pourvus d'une multitude d'ailettes 45, que l'on aperçoit de profil sur les coupes partielles des figures 1 et 2, ou en perspective dans la figure 5. Il s'agit de préférence d'ailettes en forme de parallélépipèdes carrés, par exemple en tôle, ou encore en matériau composite, comportant un orifice central 47 par lequel elles sont enfilées sur un tube 21, puis serties ou soudées afin d'établir un bon contact thermique avec lui. En outre, la hauteur des ailettes est calculée de telle manière que, contrairement aux ailettes spiralées connues, les bords 49 des ailettes portées par des tubes disposés dans des nappes situées immédiatement en-dessous ou au-dessous, se touchent, contribuant ainsi à une meilleure homogénéité de la température dans le réacteur 1. En effet, les ailettes 45 en contact les unes avec les autres contribuent au drainage de la phase liquide et favorisent par conséquent l'évacuation de cette dernière. Bien entendu, la surface d'échange optimisée permet également d'ajuster avec davantage de précision la température à l'intérieur du réacteur 1 et, finalement, de favoriser la séparation des produits lors de la cristallisation.

Il convient de noter que la fonction de drainage des ailettes 45 est particulièrement avantageuse lorsqu'au cours du procédé de cristallisation on effectue des opérations de lavage ou encore de ressuage des cristaux, qui sont bien connues de l'homme du métier.

Afin d'augmenter encore l'efficacité du drainage du réacteur, l'invention prévoit des caractéristiques supplémentaires illustrées dans les figures 3 et 4. En figure 3, on a représenté en vue en élévation un bâti 51, sur lequel repose le fond 7 du réacteur. Ce bâti est de préférence pourvu, non pas d'une tubulure unique d'alimentation et/ou de vidage du liquide à traiter, mais d'une pluralité de tubulures d'alimentation/vidage 53 disposées en parallèle, et connectées à un collecteur d'alimentation/vidage du produit à traiter, qui n'est pas représenté. Chaque tubulure 53 comporte une série de piquages verticaux 55, régulièrement répartis, débouchant dans l'enveloppe 5 du réacteur.

Selon un mode de réalisation particulièrement préféré de l'invention, au-dessus de chaque piquage 55 aménagé dans le bâti 51 du réacteur sont prévus des moyens de drainage supplémentaires, sous la forme de croisillons 57 qui viennent en contact avec les tirants 43. Ainsi, la phase liquide ayant tendance à s'écouler le long des ailettes 45 et vers le bas des réseaux de tubes 21, elle suit la trajectoire préférentielle qui lui est offerte par ces croisillons de drainage 57, améliorant encore l'efficacité de l'ensemble du réacteur 1.

Il convient de noter que lors du fonctionnement du réacteur 1, selon l'invention, pour favoriser son remplissage rapide et sous une pression moindre, le remplissage se fait de préférence par le bas. Cela permet en outre d'éviter la présence de bulles d'air dans certaines parties du réacteur lors du remplissage.

Il ressort de ce qui précède que le réacteur 1 selon l'invention résout le problème posé, en proposant un dispositif de cristallisation dépourvu des inconvénients constatés avec les dispositifs connus. En particulier, grâce à l'agencement et à la fixation de ses tubes d'échange 21, ce réacteur 1 permet d'augmenter considérablement la tenue mécanique de son enveloppe 5. En outre, du fait que chaque tube 21 débouche en dehors de l'enveloppe 5 il est aisé d'exclure un tube endommagé du circuit de fluide de transfert calorifique, voire de le réparer par chemisage, sans avoir à démonter le réacteur.

Enfin, la géométrie et la disposition des ailettes 45 et des moyens supplémentaires de drainage 57 permet d'augmenter le rendement de cristallisation du réacteur.

## Revendications

1. Réacteur (1) comportant une enceinte (3) délimitée par une enveloppe (5) destinée à recevoir un liquide à cristalliser, et une pluralité de tubes (21) disposés dans ladite enceinte (3) et destinés à être parcourus par un fluide de transfert calorifique pour entraîner la cristallisation dudit liquide, caractérisé en ce qu'il comporte une pluralité d'ouvertures (19) aménagées dans des parois (11, 13, 15, 17) de l'enveloppe (5), chacun desdits tubes (21) ayant ses extrémités (29, 31) engagées à travers des ouvertures (19) respectives et fixées à l'enveloppe (5), de sorte que les parois (11, 13, 15, 17) sont renforcées deux à deux par les tubes (21) agissant comme des tirants.

2. Réacteur (1) selon la revendication 1, caractérisé en ce que, ladite enveloppe (5) ayant une forme parallélépipédique comportant un fond (7), un couvercle (9) et quatre parois latérales (11, 13, 15, 17), lesdits tubes (21) sont disposés en nappes (25, 27) alternées selon des plans parallèles au fond (7) et au couvercle (9), les tubes d'une première série de nappes (25) étant disposées parallèlement à deux premières parois latérales (11, 13) opposées de l'enveloppe (5) et débouchant dans deux secondes parois latérles (15, 17) perpendiculaires aux deux premières parois (11, 13), et les tubes d'une seconde série de nappes (27) étant disposés parallèlement aux deux secondes parois latérales (15, 17) opposées de l'enveloppe (5) et débouchant dans les deux premières parois (11, 13), de sorte que les tubes (21) de la première série de nappes (25) sont croisés par rapport aux tubes (21) de la seconde série de nappes (27).

3. Réacteur (1) selon l'une quelconque des revendications précédentes, caractérisé en ce que les tubes (21) sont fixés par soudure au voisinage de leurs extrémités (29, 31), à deux parois latérales opposées (11, 13, 15, 17) de l'enveloppe (5).

4. Réacteur (1) selon l'une quelconque des revendications précédentes, caractérisé en ce que les tubes sont fixés par bridage, au voisinage de leurs extrémités (29, 31), à deux parois latérales opposées (11, 13, 15, 17) de l'enveloppe (5).

5. Réacteur (1) selon l'une quelconque des revendications précédentes, caractérisé en ce que les extrémités (29, 31) des tubes (21) débouchant à travers une même paroi latérale (11, 13, 15, 17) de l'enveloppe (5), sont raccordées deux à deux par l'intermédiaire de tubes de raccordement (23) à 180°, de façon à connecter en série des ensembles de tubes (21), le piquage d'entrée (35) de chaque ensemble de tubes étant en outre relié à un collecteur d'alimentation (37) connecté à une source de fluide de transfert, et le piquage de sortie (39) de chaque ensemble de tubes étant en outre relié à un collecteur d'évacuation (41) du fluide de transfert.

6. Réacteur (1) selon l'une quelconque des revendications précédentes, caractérisé en ce que le fond (7) et le couvercle (9) de l'enveloppe (5) sont reliés par une pluralité de tirants (43), contribuant à la tenue mécanique de l'enveloppe (5) du réacteur (1) lors de sa mise sous pression.

7. Réacteur (1) selon l'une quelconque des revendications précédentes, caractérisé en ce que des ailettes (45) d'échange thermique, notamment en tôle métallique ou en matériau composite, de forme parallélépipédique carrée, sont enfilées et fixées sur les tubes (21), de façon à augmenter la surface d'échange thermique entre le liquide à cristalliser et le fluide de transfert.

8. Réacteur (1) selon la revendication 7, caractérisé en ce que les ailettes (45) des nappes de tubes successives (25, 27) sont agencées de telle manière que leurs bords (49) se touchent, afin d'assurer la continuité thermique à l'intérieur du réacteur (1).

9. Réacteur (1) selon l'une quelconque des revendications précédentes, caractérisé en ce qu'il comporte un bâti (51) supportant l'enveloppe (5), ce bâti (51) comportant en parallèle une pluralité de tubulures (53) d'alimentation/vidage de produit à traiter, chaque tubulure (53) étant pourvue d'une série de piquages (55) répartis sur leur longueur et reliés à un collecteur d'alimentation/vidage du liquide à cristalliser.

10. Réacteur (1) selon la revendication 9, caractérisé en ce que des moyens de drainage, notamment sous la forme de croisillons (57), sont disposés d'une part entre les tirants (43), avec lesquels ils sont en contact, et d'autre part les piquages (55) des tubulures (53) d'alimentation/vidage, de façon à faciliter le drainage du liquide au cours de la cristallisation.
